(19) Europäisches Patentamt
European Patent Office
Office européen des brevets

(11) EP 0 924 272 A1

(12) EUROPEAN PATENT APPLICATION

(43) Date of publication:
23.06.1999 Bulletin 1999/25

(51) Int. Cl.[6]: C09D 11/00

(21) Application number: 98122258.1

(22) Date of filing: 23.11.1998

(84) Designated Contracting States:
AT BE CH CY DE DK ES FI FR GB GR IE IT LI LU MC NL PT SE
Designated Extension States:
AL LT LV MK RO SI

(30) Priority: 18.12.1997 US 993428

(71) Applicant:
E.I. DUPONT DE NEMOURS AND COMPANY
Wilmington, Delaware 19898 (US)

(72) Inventors:
- Ma, Sheau-Hwa
Chadds Ford, Pennsylvania 19317 (US)
- Reboa, Paul Felice
Corvallis, Oregon 97330 (US)

(74) Representative:
Kuhnen, Rainer Andreas, Dipl.-Ing.
R.A. Kuhnen & P.A. Wacker
Patentanwaltsgesellschaft mbH
Alois-Steinecker-Strasse 22
85354 Freising (DE)

# (54) Mottle improvement in aqueous pigmented ink jet inks

(57) Aqueous ink compositions containing an aqueous vehicle; an insoluble colorant; a cationic polymeric dispersant; and a selected surfactant demonstrate improved uniformity of print density, and a significantly less mottled appearance on plain papers.

EP 0 924 272 A1

## Description

### BACKGROUND OF THE INVENTION

This invention relates to aqueous inks for ink jet, and more particularly, to aqueous pigmented ink jet inks containing cationic dispersants and surfactants to alleviate the mottling appearance of the applied ink.

Ink jet printing is a non-impact printing process in which droplets of ink are deposited on a substrate such as paper or transparency film in response to an electronic signal. Low cost and high quality of the output, combined with relatively noise free operation, have made ink jet printers a more popular option to other types of printers used with computers. Both dyes and pigments have been used as ink colorants for ink jet printers. The dye-based inks while in general superior in color properties have several disadvantages as compared to pigment based inks. The dyes are usually water soluble and remain so after drying on the substrate. They are easily redissolved by water spills, and the image smears on contact with felt pen markers. In addition, the dyes exhibit poor light stability relative to pigments and are known to fade even under office lighting. Thus, dye-based inks are often unsuitable for use in applications requiring moisture resistance and greater light stability. The pigments are preferred colorants.

Pigmented inks having the colorant in particulate form and dye based inks interact differently with substrates, especially plain paper. With pigment based inks, there appears to be a tendency for the pigment particles to fill the holes between the paper fibers first. Unless high loading of pigment is used, the coverage of colorant in a solid area fill on plain paper will appear to be non-uniform, and the output will have a blotchy, mottled apace. High pigment loading on the other hand will cause reliability problems such as viscosity increase, clogging, etc. and adversely affects the printing. Accordingly, there exists a need for the pigmented ink jet inks to produce output with uniform density and a mottle-free appearance on the plain papers, without loss of desirable ink properties such as optical density, chroma, dispersion stability secondary color generation.

### SUMMARY OF THE INVENTION

The present invention provides an ink jet ink comprising:

(a) an aqueous vehicle:
(b) an insoluble colorant:
(c) a cationic polymeric dispersant: and
(d) a surfactant selected from the group consisting of:

(1) Amine oxides

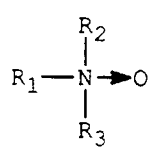

wherein $R_2$ and $R_3$ are selected from the group of H, $C_1$-$C_4$ alkyl, $C_1$-$C_4$ hydroxyalkyl; $R_1$ is a $C_8$-$C_{22}$ alkyl, aryl, or alkylaryl, linear or branched, and may contain -O-, -N-, -S-, -C(O)-, -C(O)O-, -C(O)N-, $-S(O)_2N-$, or unsaturation groups; or

(2) N-Alkyl betaines

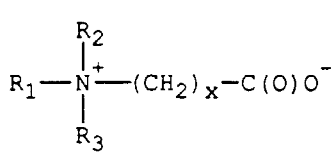

wherein x = 1-4; $R_1$ is $C_8$-$C_{22}$ alkyl, aryl, or alkylaryl, linear or branched, and may contain -O-, -N-, -S-, -C(O)-, -C(O)O-, -C(O)N-, $-S(O)_2N-$, or unsaturation groups; $R_2$ and $R_3$ are selected from the group consisting of H, $C_1$-$C_4$ alkyl, $C_1$-$C_4$ hydroxyalkyl and $C_1$-$C_4$ carboxy; and $R_2$ and $R_3$ may be connected to form a 5-6 membered cyclic structure which may contain hetero atoms selected from the group consisting of N, O, S;

(3) Ethoxylated long chain alcohols

$$R\text{-}(OCH_2CH_2)_x\text{-}OH$$

wherein R is $C_8$-$C_{22}$ alkyl, aryl, or alkylaryl, linear or branched, and may contain -O-, -N-, -S-, -C(O)-, -C(O)O-, -C(O)N-, -S(O)$_2$N-, or unsaturation groups; x = 2-100; or

(4) Acetylenic diols

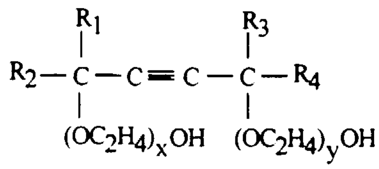

wherein x + y = 1-100 , preferably 4-50; $R_1$, $R_2$, $R_3$, and $R_4$ are independently selected from the group of $C_1$-$C_{20}$ alkyl, aryl, and alkylaryl, linear or branched; and

(5) Long chain amine salts

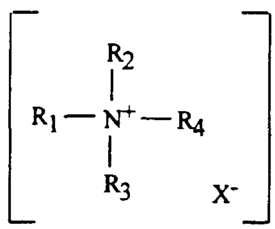

wherein $R_1$, $R_2$, $R_3$, and $R_4$ are independently selected from the group consisting of H, $C_1$-$C_4$ alkyl, $C_1$-$C_4$ hydroxy alkyl, carboxy $C_1$-$C_4$, polyethylene oxide and linear or branched $C_8$-$C_{22}$ alkyl, aryl, or alkylaryl, with the proviso that any two of $R_1$, $R_2$, $R_3$, and $R_4$ may be connected to from a 5-6 membered cyclic structure which may contain hetero atoms selected from the group consisting of N, O, S and with the further proviso that at least one of $R_1$, $R_2$, $R_3$, and $R_4$ is and linear or branched $C_8$-$C_{22}$ alkyl, aryl, or alkylaryl; X is the counter ion, and may be selected from the group consisting of the conjugate bases of organic acids and inorganic acids such as hydrochloric acid, sulfuric acid, phosphoric and, nitric acid, etc.; and mixtures thereof.

The inks of the invention are stable, have low viscosity, exhibit excellent print quality, provide excellent smear resistance after drying and good decap or crusting time. In particular, the inks of the invention show improved mottle and edge acuity on plain paper substrates verses prior art inks without sacrificing optical density, dispersion stability or loss of chroma. In fact, as demonstrated in the examples that follow, in some instances the inks of the invention show improved chroma and improved secondary colors.

The inks of the invention may be used with a variety of ink jet printers such as continuous, piezoelectric, drop-on-demand and thermal or bubble jet drop-on-demand, and are particularly adapted for use in thermal ink jet printers. These inks may also be useful in air brush printing devices.

## DETAILED DESCRIPTION OF THE EMBODIMENTS

The invention provides an ink jet ink composition which is particularly suited for use in ink jet printers in general, and thermal ink jet printers in particular. The essential components of the ink comprise an aqueous vehicle, an insoluble colorant, a cationic polymer dispersant and a surfactant. The inks may contain other ingredients to adapt the inks to the requirements of a particular ink jet printer or to provide a balance of light stability, smear resistance, viscosity, surface tension, high optical density, and crust resistance.

### Aqueous vehicle

The aqueous vehicle is water or a mixture of water and at least one water soluble organic solvent. Selection

of a suitable mixture depends on requirements of the specific application, such as desired surface tension and viscosity, the selected colorant, drying time of the ink, and the type of substrate onto which the ink will be printed. Representative water-soluble organic solvents that may be selected are disclosed in US Patent 5,085,698. A mixture of water and a polyhydric alcohol, such as diethylene glycol, is preferred as the aqueous vehicle.

If a mixture of water and a water-soluble solvent is used, the aqueous vehicle usually contains from about 30% to about 95% water with the balance (i.e., 70 to 5%) being the water-soluble solvent. The preferred compositions are approximately 60% to about 95% water, based on the total weight of the aqueous vehicle.

The amount of aqueous vehicle in the ink is in the range of approximately 70 to 99.8%, preferably 80 to 99.8%, based on total weight of the ink when an organic pigment is selected; approximately 25 to 99.8%, preferably 70 to 99.8% when an inorganic pigment is selected; and 80 to 99% when a disperse dye is selected.

## Insoluble Colorants

The insoluble colorant may be a pigment or a disperse dye. In the preferred embodiment of the present invention, the insoluble colorant is a pigment. Useful pigments comprise a wide variety of organic and inorganic pigments, alone or in combination. The pigment particles are sufficiently small to permit free flow of the ink through the ink jet printing device, especially at the ejecting nozzles that usually have a diameter ranging from 10 micron to 50 micron. The particle size also has an influence on the pigment dispersion stability, which is critical throughout the life of the ink. Brownian motion of minute particles will help prevent the particles from settling. It is also desirable to use small particles for maximum color strength. The range of useful particle size is approximately 0.005 micron to 15 micron. Preferably, the pigment particle size should range from 0.005 to 5 micron and most preferably, from 0.01 to 0.3 micron.

The selected pigment may be used in dry or wet form. For example, pigments are usually manufactured in aqueous media and the resulting pigment is obtained as water wet presscake. In presscake form, the pigment is not aggregated to the extent that it is in dry form. Thus, pigments in water wet presscake form do not require as much deaggregation in the process of preparing the inks from dry pigments. Representative commercial dry and presscake pigments that may be used in practicing the invention are disclosed in US Patent No. 5,085,698 issued February 4, 1992.

Fine particles of metal or metal oxides also may be used to practice the invention. For example, metal and metal oxides are suitable for the preparation of magnetic ink jet inks. Fine particle size oxides, such as silica, alumina, titania, and the like, also may be selected. Furthermore, finely divided metal particles, such as copper, iron, steel, aluminum and alloys, may be selected for appropriate applications.

In the case of organic pigments, the ink may contain up to approximately 30% pigment by weight, but will generally be in the range of approximately 1 to 15%, preferably approximately 1 to 8%, by weight of the total ink composition for most thermal ink jet printing applications. If an inorganic pigment is selected, the ink will tend to contain higher weight percentages of the pigment than with comparable inks employing organic pigment, and may be as high as approximately 50% because inorganic pigments generally have a higher specific gravity than the organic pigments.

Dispersed dyes may also be used as the insoluble colorant. Although both are insoluble in the ink composition, dispersed dyes differ from pigments in that pigments remain in a particulate or crystalline state throughout the printing process whereas the dispersed dyes, at some point in the printing process, become soluble.

The color and amount of disperse dye used in the ink is largely a function of choice, being primarily dependent upon the desired color of the print achieved with the ink, the purity of the dye, and its strength. Low concentrations of dye may not give adequate color vividness. High concentrations may result in poor print head performance or unacceptably dark colors. The disperse dye may be present in the amount of 0.01 to 20%, by weight, preferably 0.05 to 8%, by weight, more preferably 1 to 5%, by weight, based on the total weight of the ink. Disperse dyes that may be useful in this invention are disclosed in US 5,053,495; US 5,203,912; and US 5,102,448, for example.

## Cationic Polymeric Dispersant

The cationic polymeric dispersant comprises a backbone prepared from ethylenically unsaturated units and having at least one pendant ionic moiety derived from a cationic unit on the monomer and being of the general formula:

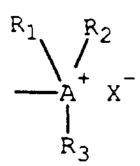

wherein A is N, P, or S; $R_1$-$R_3$ are each independently H, alkyl or alkyl ether of 1-20 carbon atoms, or aryl or alkylaryl having 6-15 carbon atoms, with the proviso that $R_3$ is not present when A is S; and wherein X is an anion selected from the group consisting of halides, conjugate bases of organic acids, and conjugated bases of inorganic acids.

The cationic polymeric dispersants suitable for practicing the invention may be a random polymer or structured polymers such as block and branched type of copolymers. Random polymers are not as effective in stabilizing pigment dispersions as structured polymers and, therefore, are not preferred. However, a random polymer which has both hydrophilic sections for aqueous solubility and hydrophobic sections for interaction with the pigment and an average molecular weight to contribute to the dispersion stability can be effectively used to practice the present invention. Such random polymeric dispersants are disclosed in US 4,597,794.

The block polymers suitable for practicing the invention are AB, ABA, BAB and ABC type of structures having hydrophobic and hydrophilic blocks and balanced block sizes to contribute to the dispersion stability. For useful branched or graft polymers, the hydrophobic portion can be conveniently built in the backbone while the hydrophilic portion is concentrated in the side chains, or vice versa. Functional groups can also be built into the hydrophobic (pigment binding) block for stronger specific interactions between the pigment and the polymer dispersant to give an improved dispersion stability. A detailed description of the block polymers can be found in the aforementioned US Patents 5,085,698; 5,272,201 and 5,519,085.

The cationic polymer dispersant may be prepared from ethylenically unsaturated monomers with at least one monomer containing the cationic unit. The cationic monomers can be in the required quaternary or tertiary configurations as polymerized, or more typically and preferably, are in the form of amine, phosphine, or thioether compounds which are then converted to the quaternary or tertiary state after the formation of the basic polymer structure. Examples of cationic monomers include N,N-dimethylaminoethyl methacrylate, N,N-dimethylaminoethyl acrylate, N,N-diethylaminoethyl methacrylate, N,N-diethylaminoethyl acrylate, t-butylaminoethyl methacrylate, 2-N-morpholinoethyl acrylate, 2-N-morpholinoethyl methacrylate, 2-trimethylammoniumethyl acrylic methosulfate, 2-trimethylammoniumethyl methacrylate, chloride salt, 4-aminostyrene, 2-vinyl pyridine, diphenylvinyl phophine, vinyltriphenylphosphonium bromide, allyl triphenylphosphonium bromide, allylmethylsulfide, and phenylvinyl sulfide. Functional monomers or polymers may be reacted with a molecule to generate the potential cationic centers, such as attaching an amine group by reacting a copolymer of glycidyl methacrylate with dimethylamine.

The cationic polymer may also contain non-ionic ethylenically unsaturated monomers. The hydrophobic monomers can be effectively used to construct pigment binding segments, especially in the case of structured polymers. Useful examples of such monomers include methyl acrylate, ethyl acrylate, n-butyl acrylate, 2-ethylhexyl acrylate, lauryl acrylate, stearyl acrylate, phenyl acrylate, benzyl acrylate, 2-phenylethyl acrylate, hydroxyethylacrylate, methyl methacrylate, ethyl methacrylate, n-butyl methacrylate, t-butyl methacrylate, 2-ethylhexyl methacrylate, lauryl methacrylate, stearyl methacrylate, cyclohexyl methacrylate, phenyl methacrylate, benzyl methacrylate, 2-phenylethyl methacrylate, 2-hydroxyethyl methacrylate, styrene, $\alpha$-methyl styrene, vinyl acetate, vinyl butyrate, and the like. Some of the hydrophilic non-ionic monomers such as those containing the ethylene oxide groups can be effectively used to balance the hydrophobicity/-hydrophilicity ratio. Useful examples of such monomers include 2-(2-methoxyethoxy)ethyl acrylate, 2-(2-methoxyethoxy)ethyl methacrylate, ethoxytriethyleneglycol methacrylate, methoxy polyethyleneglycol (molecular weight of 200-100) monomethacrylate, polyethyleneglycol (molecular weight 200-1000) monomethacrylate: and the like.

The cationic centers may be generated by neutralizing the amine groups with acids selected from the groups consisting of organic acids such as acetic acid, formic acid, oxalic acid, glycolic acid, p-toluenesulfonic acid, etc. and inorganic acids such as hydrochloric acid, sulfuric acid, phosphoric and, nitric acid, etc. Alternatively, the tertiary amines may be converted to tetra-alkylammonium groups by alkylating agents such as benzyl chloride, methyl p-toluenesulfonate, dimethyl sulfate, methyl iodide, etc.

The cationic phosphonium and sulfonium salts are preferably made by reacting a halogented polymer (e.g., a polymer containing 2-bromoethyl methacrylate) with tri-substituted phosphines such as triphenyl phosphine and di-substituted sulfides such as dimethyl sulfide, respectively.

The amount of the cationic polymer depends on the structure, molecular weight and other properties of the polymer, and on the other components of the ink composition. The dispersant polymers that are selected in practicing the invention have number average molecular weight of below 100,000, preferably below 50,000, and typically in the range of 2,000 to 10,000. The polymeric dispersant may be present in the amount of 0.1 to 25%, preferably 0.1 to 8% by weight, based on the total weight of the ink composition. If the amount is too high, it will be difficult to maintain the desired ink viscosity. If insufficient polymer is present, dispersion stability will be adversely affected.

## Surfactant

The surfactants of this invention are generally available from commercial sources.

(1) Amine oxides

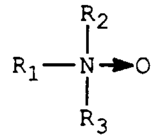

wherein $R_2$ and $R_3$ are selected from the group of H, $C_1$-$C_4$ alkyl, $C_1$-$C_4$ hydroxyalkyl; $R_1$ is a $C_8$-$C_{22}$ alkyl, aryl, or alkylaryl, linear or branched, and may contain -O-, -N-, -S-, -C(O)-, -C(O)O- -C(O)N-, -S(O)$_2$N-, or unsaturation groups; or

(2) N-Alkyl betaines

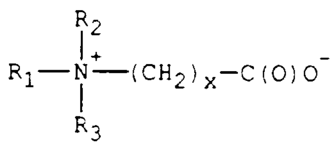

wherein x = 1-4; $R_1$ is $C_8$-$C_{22}$ alkyl, aryl, or alkylaryl, linear or branched, and may contain -O-, -N-, -S-, -C(O)-, -C(O)O-, -C(O)N-, -S(O)$_2$N-, or unsaturation groups; $R_2$ and $R_3$ are selected from the group consisting of H, $C_1$-$C_4$ alkyl, $C_1$-$C_4$ hydroxyalkyl and $C_1$-$C_4$ carboxy; and $R_2$ and $R_3$ may be connected to form a 5-6 membered cyclic structure which may contain hetero atoms selected from the group consisting of N, O, S;

(3) Ethoxylated long chain alcohols

$$R\text{-}(OCH_2CH_2)_x\text{-}OH$$

wherein R is $C_8$-$C_{22}$ alkyl, aryl, or alkylaryl, linear or branched, and may contain -O-, -N-, -S-, -C(O)-, -C(O)O-, -C(O)N-, -S(O)$_2$N-, or unsaturation groups; x=2-100;or

(4) Acetylenic diols

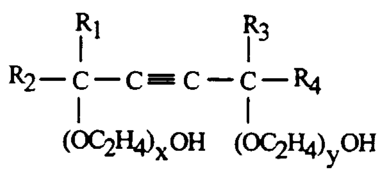

wherein

x + y = 1-100, preferably 4-50; $R_1$, $R_2$, $R_3$, and $R_4$ are independently selected from the group of $C_1$-$C_{20}$ alkyl, aryl, and alkylaryl, linear or branched; and

(5) Long chain amine salts

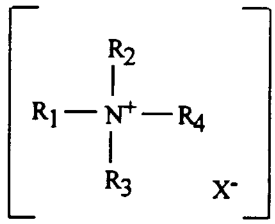

wherein $R_1$, $R_2$, $R_3$, and $R_4$ are independently selected from the group consisting of H, $C_1$-$C_4$ alkyl, $C_1$-$C_4$ hydroxy alkyl, carboxy $C_1$-$C_4$, polyethylene oxide and linear or branched $C_8$-$C_{22}$ alkyl, aryl, or alkylaryl, with the proviso that any two of $R_1$, $R_2$, $R_3$, and $R_4$ may be connected to from a 5-6 membered cyclic structure which may contain hetero atoms selected from the group consisting of N, O, S and with the further proviso that at least one of $R_1$, $R_2$, $R_3$, and $R_4$ is and linear or branched $C_8$-$C_{22}$ alkyl, aryl, or alkylaryl; X is the counter ion, and may be selected from the group consisting of the conjugate bases of organic acids and inorganic acids such as hydrochloric acid, sulfuric acid, phosphoric and, nitric acid, etc.; and mixtures thereof.

Surfactants in groups (1) and (2) are classified as amphoteric surfactants. Specific examples of the amine oxides include Ammonyx® CO (cetyl dimethylamine oxide) by Stepan Co.. Ammonyx® MCO (myristyl cetyl dimethylamine oxide) by Stepan Co., Standamox® CAW (cocoamidopropyl dimethylamine oxide) by Henkel Corp., and the like. Specific examples of the N-alkyl betaines include Chembetaine® C (cocoamidopropyl betaine) by Chemron Co., Chembetaine® L (lauramidopropyl betaine) by Chemron Co., Macham® OB-30 (oleyl betaine) by The McIntyre Group Ltd., Amphoterge® K-2 (disodium cocoamphodiproprionate) by Lonza Inc., and the like.

Surfactants in group (3) and (4) are classified as non-ionic surfactants. Specific examples of useful surfactants in group iii) include Tergitol® 15S-7 (C11-C15 secondary alcohol ethoxylate) by Union Carbide Co., Alfonic® 610-50R (ethoxylated linear alcohol, 50% ethyleneoxide, HLB=10.0) by Vista Chemical Co., Alkamuls® S (ethoxylated stearic acid, HLB= 11.2) by Rhone-Poulenc Co., and the like. Examples of surfactants in group (4), acetylinic diols, include Surfynol® 104 (tetramethyl decynediol), Surfynol® 440 (ethoxylated tetramethyl decynedion, HLB = 8.0), Surfynol® 485 (ethoxylated tetramethyl decynediol, HLB = 17.0) by Air Products & Chemicals, Inc., and the like.

The surfactants in group (5) are classified as cationic surfactants. Specific examples of the cationic surfactants which may be used to advantage in the present invention include N-alkyltrimethyl ammonium chloride, N,N-dialkyldimethyl ammonium chloride, Variquat® 66 (tallow alkyl bis(polyethoxy)ethyl ammonium, ethyl sulfate) by Witco Corp., Variquat® 638 (methyl-bis(2-hydroxyethyl) coco ammonium chloride) by Witco Corp., and the like.

The surfactants in groups (1) - (5) are compatible with the acidic pH (<7.0) and the cationic nature of the inks of this invention. Mixtures of these surfactants are also useful in this invention. A concentration of surfactant from about 0.1% to about 10% by weight based on the total weight of the ink is effective in alleviating the mottle, with about 0.5% to about 3% by weight based on the total weight of the ink preferred.

## Other Ingredients

Consistent with the requirements of the invention, various types of additives may be used to optimize the properties of the ink compositions for specific applications. Polymeric film-forming binder materials may be added to improve the smear resistance. As is well known to those skilled in the art, biocides may be used in the ink compositions to inhibit growth of microorganisms. Sequestering agents such as EDTA may also be included to eliminate deleterious effects of heavy metal impurities. Other known additives, such as humectants, viscosity modifiers and other acrylic or non-acrylic polymers made also be added to improve various properties of the ink compositions as desired.

## Ink Properties and Preparation

The ink compositions of the invention may be prepared in a similar manner as other ink jet inks. First, the selected colorant is pre-mixed with the cationic dispersant in the aqueous vehicle and the colorant-dispersant mixture is then dispersed in the aqueous carrier. The dispersing step may be accomplished in a horizontal mini mill, a ball mill, an attritor, or by passing the mixture through a plurality of nozzles within a liquid jet interaction chamber at a liquid pressure of at least 5,000 psi to produce a uniform dispersion of the pigment particles in the aqueous vehicle.

It is generally desirable to make the colorant dispersion in concentrated form, which is subsequently diluted with a suitable liquid containing the desired additives such as the surfactants of this invention to the appropriate concentration for the desired viscosity, color, hue, density and print area coverage for the particular application.

The ink drop velocity, drop volume, and stream stability are greatly affected by the surface tension and the viscosity of the ink. Ink jet inks suitable for use with ink jet printing systems should have a surface tension in the range of about 20 dyne/cm to about 80 dyne/cm and, more preferably, in the range 25 dyne/cm to about 75 dyne/cm at 20°C. Acceptable viscosities are no greater than 20 cP, and preferably in the range of about 1.0 cP to about 10.0 cP at 20°C.

## EXAMPLES

Dispersant 1: Benzyl methacrylate -b-dimethylaminoethyl methacrylate -co-ethoxy-triethylene glycol methacrylate (10//20/3 degree of polymerization)

A 12-liter flask was equipped with a mechanical stirrer, thermometer, N2 inlet, drying tube outlet, and addition funnels. Tetrahydrofuran ("THF"), 3072.1 grams, and mesitylene, 11.4 grams, were charged to the flask. The catalyst, tetrabutyl ammonium m-chlorobenzoate, 3.0 ml of a 1.0 M solution in acetonitrile, was then added. Initiator, 1-methoxy-1-trimethylsiloxy-2-methylpropene, 156.3 grams (0.90 mole) was injected. Feed I [a mixture of 2-dimethylaminoethyl methacrylate ("DMAEMA"), 2827.3 grams (18.0 mole) and ethoxytriethyleneglycol methacrylate ("ETEGMA"), 668.3 grams (2.72 mole)] was started at 0.0 minutes and added over 45 minutes. One hundred minutes after Feed I was completed (over 99% of the monomers had reacted), Feed II [benzyl methacrylate ("BzMA"), 1583.8 grams (8.99 mole) was started and added over 30 minutes. At 400 minutes, 155.0 grams of dry methanol were added to the above solution and distillation begun. A total of 1066 grams of solvent were removed to give a 69.8% polymer solution.

Dispersant 2: Benzyl methacrylate -b-methacrylic acid (15//10 degree of polymerization).

A 5-liter flask was equipped with a mechanical stirrer, thermometer, N2 inlet, drying tube outlet, and addition funnels. THF, 1481.3 gm, initiator, 1,1-bis(trimethylsiloxy)-2-methyl propene, 100.1 grams (0.43 mole), and mesitylene, 4.93 grams, were charged to the flask. The catalyst, tetrabutyl ammonium m-chlorobenzoate, 1.2 ml of a 1.0 M solution in acetonitrile, was then added. Feed I [tetrabutyl ammonium m-chlorobenzoate, 1.2 ml of a 1.0 M solution in 5.6 grams THF] was started and added over 130 minutes. Feed II [trimethylsilyl methacrylic acid, 681.4 grams (4.31 mole)] was started at 0.0 minutes and added over 30 minutes. Thirty minutes after Feed II was completed (over 98% of the monomer had reacted), Feed III [BzMA, 1138.1 grams (6.46 mole)], was started and added over 60 minutes. At 180 minutes (over 99.7% of the monomer had reacted), 300.5 grams of methanol were added, and distillation begun. A total of 710.4 grams of solvent were removed to give a 51.8% polymer solution.

Binder 1: Ethoxytriethyleneglycol methacrylate-co-dimethylaminoethyl methacrylate (80/20% by weight)

A 12-liter flask was equipped with a mechanical stiffer, nitrogen inlet, drying tube outlet and addition funnels. THF, 1700 grams; p-xylene, 18 grams; and tetrabutylammonium m-chlorobenzoate. 2.6 mL of a 1.0 M THF solution were charged to the flask. Initiator, 1-methoxy-1-trimethylsiloxy-2-methylpropene, 150 grams, was injected. Feed 1 (ETEGMA, 3448 grams and DMAEMA, 862 grams) was started and added over 60 min. After another 30 min. all of the monomers were consumed. The reaction was quenched with methanol, 69 grams. Concentrated phosphoric acid, 561 mL, and deionized water, 3736 grams, were charged, in batches, to the flask. At the same time, the contents were brought to reflux and volatiles were distilled off until the vapor temperature exceeds 99°C. This made the phosphate salt of ETEGMA/DMAEMA random copolymer with molecular weight of around 5,000 at about 57 % solids in water.

Binder 2: Benzyl methacrylate-co-ethoxytriethyleneglycol methacrylate-co-dimethylaminoethyl methacrylate (20/60/20% by weight)

A 5-liter flask was equipped with a mechanical stirrer, nitrogen inlet, drying tube outlet and addition funnels. THF, 850 grams; p-xylene, 4 grams; and tetrabutylammonium m-chlorobenzoate, 0.9 mL of a 1.0 M THF solution, were charged to the flask. Initiator, 1-methoxy-1-trimethylsiloxy-2-methylpropene, 31 grams was injected. Feed 1 (BzMA, 178 grams; ETEGMA, 534 grams; and DMAEMA, 178 grams) was started and added over 100 min. After another 80 min. no residual monomer was detected. The reaction was quenched with methanol, 57 grams. The volatile solvent was then distilled off and replaced by a mixture of 2-pyrrolidone and N-methyl pyrrolidone to give a polymer solution containing 58.26% of the terpolymer of BzMA/ETEGMA/DMAEMA terpolymer (wt. ratio 20/60/20) with molecular weight of around 5,000, 27.55% of 2-pyrrolidone, 5.20% of N-methylpyrrolidone and 2.50% of residual tetrahydrofuran.

1706.2 grams of the resulting polymer solution were mixed with 131.22 grams of phosphoric acid (85.4%), 8.31 grams of benzoic acid, and 1004.6 grams of deionized water until a clear solution was obtained. This produced a polymer solution containing 39.02% of the phosphate salt of the above terpolymer.

Dispersion 1:

Dispersant 1 (343.8 grams), 360.0 grams of Enduraphthal® blue BT-617D pigment (Cookson Pigment Co., Newark, NJ) and 38.3 grams of diethylene glycol were mixed and the mixture was then charged to a 2-roll-mill and processed for 30 minutes. This made a pigment chip that contained 56.4% pigment and 37.6% polymer (i.e.. it had a pigment-to-dispersant ratio ("P/D") of 1.5/1). The milled chip, 200 grams, was then dissolved with 26.91 grams phosphoric acid (86%) as the neutralizing agent, and 1.89 grams of benzoic acid as biocide in 523.2 grams of deionized water to make an aqueous pigment dispersion concentrate that contained 15%, pigment at a pH of 5.16.

Dispersion 2:

The process for Dispersion 1 was repeated except that 463.3 grams of Dispersant 2 was used in lieu of Dispersant 1 to make a pigment chip that contained 56.4% pigment and 37.6% polymer (i.e., it had a pigment-to-dispersant ratio ("P/D") of 1.5/1). The milled chip, 200.0 grams, was then dissolved with 27.46 grams potassium hydroxide (45% in deionized water) as the neutralizing agent, and 2.0 grams Proxel GXL (ICI Americas, Inc., Wilmington, DE) as biocide in 522.54 grams of deionized water to make an aqueous pigment dispersion concentrate that contained 15% pigment at a pH of 8.2.

Dispersion 3:

The process for Dispersion 1 was repeated except that 360.0 grams of Sunfast® magenta 122 pigment (Sun Chemical Corp., Cincinnati, OH) was used in lieu of the blue pigment to make a pigment chip that contained 56.4% pigment and 37.6% polymer (P/D = 1.5/1). The milled chip was then neutralized and diluted with phosphoric acid as described in Dispersion 1 to produce a 15% cationic magenta dispersion.

Dispersion 4:

214.9 grams of Dispersant 1,150.0 grams of Irgalite® LBS Yellow 174 pigment (Ciba Geigy Corp., Newport, DE) were mixed and the mixture was charged to a 2-roll-mill and processed for 30 minutes. This made a pigment chip that contained 50% pigment and 50% polymer (P/D = 1/1). The milled chip was then neutralized and diluted with phosphoric acid as described in Dispersion 1 to produce a 15% cationic yellow dispersion.

Dispersion 5:

The procedure described in Dispersion 4 was repeated except that Sunbrite® Yellow 13 pigment (Sun Chemical Corp., Cincinnati, OH) was used.

**Example 1 - Inks 1-6**

Ink #1: A control ink of the following formula was prepared by combining the ingredients with magnetic stirring over 10-15 minutes:

| Ingredient | Amount (wt%) |
|---|---|
| Dispersion 1 | 3.5 |
| Binder 2 | 2.0 |
| 2-Pyrrolidone | 6.0 |
| Multranol® 4012 (Miles Inc., Pittsburgh, PA) | 2.5 |
| Tetraethylene glycol | 10.0 |
| Givgard® DXN (Givaudan-Roure Corp., Clifton, NJ) | 0.1 |
| Balance of deionized water | |

The pH of the ink was adjusted to 3.22 with phosphoric acid. The ink has a surface tension of 40.7 dyne/cm and an average particle size of 114 nm as measured by Brookhaven BI-90 particle sizer (Brookhaven Instrument Corp., Holtsville, NY).

Ink #2: The formula of Ink #1 was repeated except that an amphoteric surfactant Emcol® 6748 (Witco Corp., New York, NY) was added at 1% by weight based on the total weight of the ink.

Ink #3: The formula of Ink #1 was repeated except that a cationic surfactant Variquat® 638 (Sherex Chemical Co., Inc., Dublin, OH) was added at 1% by weight based on the total weight of the ink.

Ink #4: The formula of Ink #1 was repeated except that a cationic surfactant Variquat® 66 (Sherex Chemical Co., Inc., Dublin, OH) was added at 1% by weight based on the total weight of the ink.

Ink #5: The formula of Ink #1 was repeated except that a nonionic surfactant Tergitol® 15S-7 (Union Carbide Chemical Co., Danbury, CT) was added at 1% by weight based on the total weight of the ink.

Ink #6: The formula of Ink #1 was repeated except that an amphoteric surfactant Standamox® CAW (Henkel Corp., Hoboken, NJ) was added at 1% by weight based on the total weight of the ink.

Test Results:

The inks were filled into a thermal tri-chambered ink jet pen and printed with a Hewlett Packard DeskJet 850 ink jet printer (Hewlett Packard Co., Palo Alto, CA) on Champion® Datacopy paper (Champion International Corp., Stamford, CT). The printing results are listed below.

| Ink | Visc.[a] | Surface Tension[b] | Mottle/Edge Acuity[f] | Bleed[c] | | Chroma/Hue Angle (unit/degree)[d] | T-cycle[e] (nm) before/after |
|---|---|---|---|---|---|---|---|
| | | | | C/C | C/K | | |
| 1 | 3.61 | 40.7 | 0 | 0 | 0 | 41.4/267.7 | 114/104 |
| 2 | 3.82 | 33.6 | ++ | ++ | ++ | 42.9/268.0 | 113/101 |
| 3 | 3.86 | 36.6 | + | NA | NA | 43.1/268.0 | 116/98 |
| 4 | 3.98 | 39.7 | 0 | NA | NA | 41.2/268.2 | 118/98 |
| 5 | 4.11 | 31.5 | ++ | ++ | ++ | 43.5/268.3 | 109/98 |
| 6 | 4.02 | 34.0 | ++ | ++ | ++ | 43.7/266.6 | 103/98 |

a Viscosity is reported in centipoise at 25°C and was measured on a Brookfield digital viscometer, Model DV-II
b Surface tension is reported in dynes/cm was measured by a Autotensiomat®, Model 215 surface tension analyzer (Fisher Scientific, Pittsburgh, PA)
c C/C bleed refers to the color to color bleed between 2 different color inks of this invention. C/K bleed refers to the bleed between a color ink of this invention with the commercial anionic pigmented black ink supplied for the printer by Hewlett Packard Co.
d The color properties were measured with a Milnota Chrom Meter, Model CR-221 (Japan)
e T-cycle: The ink was stable after it had been subjected to 4 temperature cycles, each consisting of 4 hours at -20°C and 4 hours at 70°C. The particle size was measured by Brookhaven BI-90 particle sizer (Brookhaven Instrument Corp., Holtsville, NY)
f 0: Control
+: Detectable improvement
++: Significant improvement

With the exception of Ink #4, all of the inks of this invention produced much more uniform appearance than the control ink which appeared to be blotchy. The improved uniformity of density is also reflected on the higher chroma values for the inks of this invention. Furthermore, the color-to-color and color-to-black bleed is also significantly improved in the inventive inks. The secondary colors, which are made by printing more than one color ink, also showed improvement on the overall color quality due to the improved uniformity of color density. All inventive inks are stable to the surfactants of this invention as demonstrated with the temperature cycle data.

**Example 2 - Inks 7 - 8**

Ink #7 (Control): The formula of Ink #1 was repeated except that Binder 1 was used in place of Binder 2.

Ink #8: The formula of Ink #7 was repeated except that a nonionic surfactant Surfynol® 485 (Air Products and Chemicals, Inc., Allentown, PA) was added at 1% by weight based on the total weight of the ink.

Test Results:

The inks were tested as in Example 1.

| Ink # | Visc. | Surface Tension | Mottle/Edge Acuity | Bleed | | Chroma/Hue Angle (unit/ degree) | T-cycle (nm) before/after |
|---|---|---|---|---|---|---|---|
| | | | | C/C | C/K | | |
| 7 | 3.61 | 39.6 | 0 | 0 | 0 | 43.3/267.5 | 108/101 |
| 8 | 3.61 | 39.2 | ++ | ++ | + | 43.5/267.0 | 108/94 |

The results show that the type of binder used in the ink does not affect the improvement seen with the combination of components comprising this invention.

**Example 3 - Inks 9 - 15**

Ink #9 (Control): An ink of the following formula was prepared by combining the ingredients with magnetic stirring over 10-15 minutes:

| Ingredient | Amount (wt%) |
|---|---|
| Dispersion 2 | 2.5 |
| 2-Pyrrolidone | 6.0 |
| N-Methyl pyrrolidone | 6.0 |
| Liponics® EG-1 (Lipo Chemical Co., Paterson, NJ) | 5.0 |
| Tetraethylene glycol | 4.0 |
| Nuosept® 95 (Huls America Inc., Piscataway, NJ) | 0.5 |
| Deionized water to make 100% | |

The pH of the ink was adjusted to 8.2 with KOH. The ink has a surface tension of 50.5 dyne/cm and an average particle size of 93 nm as measured by Brookhaven BI-90 particle sizer.

Ink #10: The formula of Ink #9 was repeated with the following exception: an amphoteric surfactant Ammonyx® MCO (Stepan Co., Northfield, IL) was added at 1% by weight based on the total weight of the ink.

Ink #11: The formula of Ink #9 was repeated except that an amphoteric surfactant Standamox® CAW was added

at 1% by weight based on the total weight of the ink.

Ink #12: The formula of Ink #9 was repeated except that an amphoteric surfactant oleyl amine oxide was added at 1% by weight based on the total weight of the ink.

Ink #13: The formula of Ink #9 was repeated except that an amphoteric surfactant Emcol® 6748 was added at 1% by weight based on the total weight of the ink.

Ink #14: The formula of Ink #9 was repeated except that a nonionic surfactant Tergitol® 15S-7 was added at 1% by weight based on the total weight of the ink.

Ink #15: The formula of Ink #9 was repeated except that a nonionic surfactant Surfynol® 485 was added at 1% by weight based on the total weight of the ink.

Test Results:

The inks were tested as in Example 1.

| Ink # | Visc. | Surface Tension | Mottle/Edge Acuity[h] | Strike-thru[i] | Optical Density[g] | T-cycle (nm) before/after |
|---|---|---|---|---|---|---|
| 9 | 2.96 | 50.5 | 0 | - | 1.06 | 93/86 |
| 10 | 3.21 | 33.5 | -- | -- | - 0.88 | 83/83 |
| 11 | 3.06 | 35.9 | -- | -- | 0.96 | 93/75 |
| 12 | 3.21 | 32.4 | -- | -- | 0.89 | 81/81 |
| 13 | 2.88 | 37.3 | -- | -- | 1.00 | 80/83 |
| 14 | 3.29 | 31.8 | -- | -- | 0.88 | 80/83 |
| 15 | 3.11 | 43.7 | -- | -- | 0.96 | 93/80 |

g The optical density was measured with an X-Rite densitometer, Model 418 (X-Rite, Inc., Grandville, MI)
h 0: Control
-: Significantly more mottled and fuzzier edges than control
--: Sever mottling
i 0: no detectable strike-thru
-: detectable strike-thru
--: severe strike-thru

The Control (Ink #9) having high surface tension showed very little strike-thru the paper and the edges of the prints were sharp as expected. However, the solid area fill had a blotchy, uneven appearance. Similar surfactants from this invention significantly reduced the surface tension for these comparative anionic inks. This led to a significantly lowered optical density, and much more strike-thru the paper was observed. Mottling and edge acuity, and the overall appearance was dramatically affected in a negative manner.

**Example 4 - Inks 16 - 20**

Ink #16: A control ink of the following formula was prepared by combining the ingredients with magnetic stirring over 10-15 minutes:

| Ingredient | Amount (wt%) |
|---|---|
| Dispersion 3 | 2.5 |
| Basonyl® red NB560 (Basic Violet 11) dye (BASF Corp., Clifton, NJ) | 0.6 |
| Binder 1 | 1.0 |
| 2-Pyrrolidone | 7.3 |
| N-Methyl pyrrolidone | 6.0 |
| Multranol® 4012 | 1.5 |
| Dantocol® DHE | 1.0 |
| Tetraethylene glycol | 8.7 |
| Deionized water to make 100% | |

The pH of the ink was adjusted to 3.02 with phosphoric acid. The ink has a surface tension of 45.4 dyne/cm and an average particle size of 108 nm as measured by Brookhaven BI-90 particle sizer.

Ink #17: The formula of Ink #16 was repeated except that a amphoteric surfactant Emcol® 6748 was added at 1% by weight based on the total weight of the ink.

Ink #18: The formula of Ink #16 was repeated except that a cationic surfactant Variquat® 638 was added at 1% by weight based on the total weight of the ink.

Ink #19: The formula of Ink #16 was repeated except that a cationic surfactant Variquat® 66 was added at 1% by weight based on the total weight of the ink.

Ink #20: The formula of Ink #16 was repeated except that a nonionic surfactant Tergitol® 15S-7 was added at 1% by weight based on the total weight of the ink.

Test Results:

The inks were filled into single chambered thermal ink jet printheads and printed with a Hewlett Packard DeskJet 500 ink jet printer on Champion Datacopy paper.

| Ink # | Visc. | Surface Tension | Mottle/Edge Acuity | Optical Density | T-cycle (nm) before/after |
|---|---|---|---|---|---|
| 16 | 3.71 | 45.4 | 0 | 1.06 | 108/99 |
| 17 | 3.76 | 35.3 | ++ | 1.01 | 101/123 |
| 18 | 3.79 | 38.0 | ++ | 1.01 | 107/100 |
| 19 | 3.78 | 41.3 | + | 1.01 | 108/95 |
| 20 | 3.96 | 31.8 | ++ | 1.03 | 88/221 |

The Control ink (#16) had slightly higher measured optical density. However, the density appeared to be non-uniform and gave a blotchy appearance and more feathering on the edges than all the experimental inks.

## Example 5 - Ink 21

Ink #16 was also the control for this set of comparison.

Ink #21: The formula of Ink #16 was repeated except that an amphoteric surfactant Standamox® CAW was added at 1% by weight based on the total weight of the ink.

Test Results:

These inks were tested as in Example 1.

| Ink # | Visc. | Surface Tension | Mottle/Edge Acuity | Bleed | | Chroma/Hue Angle (unit/degree) | T-cycle (nm) before/after |
|---|---|---|---|---|---|---|---|
| | | | | C/C | C/K | | |
| 16 | 3.71 | 45.4 | 0 | 0 | ++ | 64.5/347.2 | 108/99 |
| 21 | 4.02 | 43.3 | ++ | 0 | ++ | 62.9/348.1 | 108/91 |

The red dye Basic Violet 11 feathered and bled into other colors when printed adjacent thereto. A dramatic improvement in color uniformity was observed without significantly sacrificing the chroma.

**Example 6 - Inks 22 - 23**

Ink #22: The formula of Ink #16 was repeated with the following exception: an anionic dye Acid Red 52 was used in place of the Basic Violet 11 dye, and benzoic acid at 0.25% was used as a biocide.

Ink #23: The formula of Ink #22 was repeated except that an amphoteric surfactant Standamox® CAW was added at 1% by weight based on the total weight of the ink.

Test Results:

The inks were tested as in Example 1.

| Ink # | Visc. | Surface Tension | Mottle/Edge Acuity | Bleed | | Chroma/Hue Angle (unit/ degree) | T-cycle (nm) before/after |
|---|---|---|---|---|---|---|---|
| | | | | C/C | C/K | | |
| 22 | 3.66 | 45.7 | 0 | 0 | ++ | 57.7/345.6 | 108/99 |
| 23 | 3.26 | 33.7 | ++ | 0 | ++ | 57.7/345.5 | 108/114 |

The inks containing red dye Acid Red 52 also feathered and bled into other colors when they were printed adjacent thereto. A dramatic improvement in color uniformity was observed without significantly sacrificing the chroma. Beside the improvement on the overall appearance, the lower surface tension of ink #23 of the invention also led to faster drying.

**Example 7 - Inks 24 - 27**

Ink #24: A control ink of the following formula was prepared by combining the ingredients with magnetic stirring over 10-15 minutes:

| Ingredient | Amount (wt%) |
|---|---|
| Dispersion 4 | 4.5 |
| Binder 2 | 2.5 |
| 2-Pyrrolidone | 4.9 |
| Multranol® 4012 | 2.5 |
| Tetraethyleneglycol | 10.0 |
| Givgard® DXN | 0.1 |
| Deionized water to make 100% | |

The pH of the ink was adjusted to 3.16 with phosphoric acid

Ink #25: The formula of Ink #24 was repeated except that an amphoteric surfactant Standamox® CAW was added at 2% by weight based on the total weight of the ink.

Ink #26: The formula of Ink #24 was repeated except that Dispersion 5 was used in place of the Dispersion 4 and an amphoteric surfactant Standamox® CAW was added at 1% by weight based on the total weight of the ink.

Ink #27: The formula of Ink #24 was repeated except that Dispersion 5 was used in place of the Dispersion 4, and a nonionic surfactant Tergitol® 15S-7 was added at 1% by weight based on the total weight of the ink.

Test Results:

The inks were tested as in Example 1.

| Ink # | Visc. | Surface Tension | Mottle/Edge Acuity | Bleed | | Chroma/Hue Angle (unit/degree) | T-cycle (nm) before/after |
|---|---|---|---|---|---|---|---|
| | | | | C/C | C/K | | |
| 24 | 6.28 | 40.1 | 0 | 0 | ++ | 78.3/96.9 | 122/81 |
| 25 | 7.98 | 28.8 | 0 | ++ | ++ | 82.8/96.2 | 122/74 |
| 26 | 5.04 | 32.6 | 0 | ++ | ++ | 83.0/96.3 | 121/107 |
| 27 | 5.61 | 31.6 | 0 | ++ | ++ | 81.0/96.6 | 121/104 |

The edge acuity for a very light color such as the yellow ink is very difficult to observe, and is therefor not as critical as it is for the other colors. However, the improvement provided by this invention in mottling and color coverage is evidenced by the increased chroma value in comparison to the control ink where no surfactant was used.

**Example 8 - Inks 28 - 31**

Ink # 28: A control ink of the following formula was prepared by combining the ingredients with magnetic stirring over 10-15 minutes:

| Ingredient | Amount (wt%) |
|---|---|
| Dispersion 3 | 3.0 |
| 2-Pyrrolidone | 7.3 |
| N-Methyl pyrrolidone | 6.0 |
| Multranol® 4012 | 1.5 |
| Dantocol® DHE | 1.0 |
| Tetraethyleneglycol | 8.7 |
| Benzoic acid | 0.25 |
| Balance of deionized water | |

The pH of the ink was adjusted to 3.29 with phosphoric acid.

Ink #29: The formula of Ink #28 was repeated except that an amphoteric surfactant Standamox® CAW was added at 1% by weight based on the total weight of the ink.

Ink #30: The formula of Ink #28 was repeated except that a nonionic surfactant Tergitol® 15S-7 was added at 1% by weight based on the total weight of the ink.

Ink #31: The formula of Ink #28 Was repeated except that a amphoteric surfactant Emcol® 6748 was added at 1% by weight based on the total weight of the ink.

Test Results:

The inks were tested as in Example 4.

| Ink # | Visc. | Surface Tension | Mottle/Edge Acuity | Optical Density | Chroma/Hue Angle (unit/degree) | T-cycle (nm) before/after |
|---|---|---|---|---|---|---|
| 28 | 3.57 | 46.3 | 0 | 0.73 | 46.7/346.4 | 105/101 |
| 29 | 3.77 | 35.0 | ++ | 0.78 | 50.2/346.3 | 103/100 |
| 30 | 4.18 | 32.8 | ++ | 0.77 | 49.9/346.0 | 90/138 |
| 31 | 3.91 | 35.5 | ++ | 0.77 | 49.5/346.4 | 99/140 |

The Control, Ink #28, exhibited sever mottling due to non-uniform penetration of the ink into the paper and poor edge acuity due to feathering. All inventive inks having low surface tension dried fast and produced much more uniform and higher density, and sharper edge acuity for a significantly improved overall appearance. The higher chroma values for the experimental inks versus the control ink are also consistent with the observed output improvement. This expertment demonstrated that hinders are not necessary to achieve the effect of this invention. All experimental inks are stable to the surfactants of this invention as demonstrated by the fact that no flocculation or settling was observed with the temperature cycling and the particle size data.

## Claims

1. An ink jet ink comprising:

(a) an aqueous vehicle;
(b) an insoluble colorant;
(c) a cationic polymeric dispersant; and
(d) at least one surfactant selected from the group consisting of:

(1) amine oxide amphoteric surfactants having the formula:

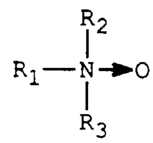

wherein $R_2$ and $R_3$ may be selected from the group of H, $C_1$-$C_4$ alkyl, $C_1$-$C_4$ hydroxyalkyl; $R_1$ is $C_8$-$C_{22}$ which may be alkyl, aryl, or alkylaryl, may be linear or branched, and may contain -O-, -N-, -S-, -C(O)-, -C(O)O-, -C(O)N-, -S(O)$_2$N-, or unsaturation groups;

(2) N-alkyl betaine amphoteric surfactants having the formula:

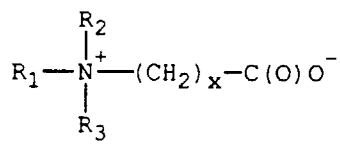

wherein x = 1-4; $R_1$ is $C_8$-$C_{22}$ which may be alkyl, aryl, or alkylaryl, may be linear or branched, and may contain -O-, -N-, -S-, -C(O)-, -C(O)O-, -C(O)N-, -S(O)$_2$N-, or unsaturation groups; $R_2$ and $R_3$ may be selected from the group consisting of H, $C_1$ -$C_4$ alkyl, $C_1$ -$C_4$ hydroxyalkyl and $C_1$-$C_4$ carboxy; or $R_2$ and $R_3$ may be connected to form a 5-6 membered cyclic structure which may contain hetero atoms selected from the group consisting of N, O, S;

(3) ethoxylated long chain alcohol nonionic surfactants having the formula:

$$R\text{-}(OCH_2CH_2)_x\text{-}OH$$

wherein R is $C_8$-$C_{22}$ alkyl, aryl, or alkylaryl, may be linear or branched, or may contain -O-, -N-, -S-, -C(O)-, -C(O)O-, -C(O)N-, -S(O)$_2$N-, or unsaturation groups; x = 2-100;

(4) acetylenic diols

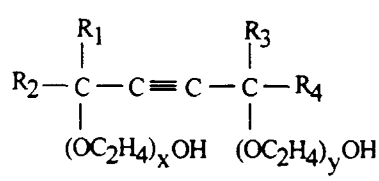

wherein x + y= 1-100 ; $R_1$,$R_2$,$R_3$, and $R_4$ are independently selected from the group of $C_1$-$C_{20}$ alkyl, aryl, and alkylaryl, linear or branched; and

(5) long chain amine salts

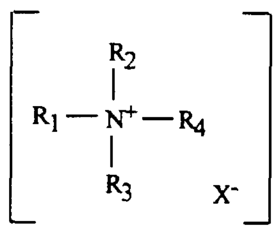

wherein $R_1$, $R_2$, $R_3$, and $R_4$ are independently selected from the group consisting of H, $C_1$-$C_4$ alkyl, $C_1$-$C_4$ hydroxy alkyl, carboxy $C_1$-$C_4$, polyethylene oxide and linear or branched $C_8$-$C_{22}$ alkyl, aryl, or alkylaryl, with the proviso that any two of $R_1$, $R_2$, $R_3$, and $R_4$ may be connected to from a 5-6 membered cyclic structure which may contain hetero atoms selected from the group consisting of N, O, S and with the further proviso that at least one of $R_1$, $R_2$, $R_3$, and $R_4$ is and linear or branched $C_8$-$C_{22}$ alkyl, aryl, or alkylaryl; and X is a counter ion.

**2.** The ink jet ink of Claim 1 wherein the insoluble colorant is a pigment.

**3.** The ink jet ink of Claim 2 wherein the surfactant is selected from the group consisting of cetyl dimethylamine oxide, myristyl cetyl dimethylamine oxide; cocoamidopropyl dimethylamine oxide; cocoamidopropyl betaine, lauramidopropyl betaine, oleyl betaine; disodium cocoamphodiproprionate; a $C_{11}$ -$C_{15}$ secondary alcohol ethoxylate; ethoxylated linear alcohol, 50% ethyleneoxide; ethoxylated stearic acid; tetramethyl decynediol, ethoxylated tetramethyl decynedion HLB = 8.0; ethoxylated tetramethyl decynediol, HLB = 17.0; N-alkyltrimethyl ammonium chloride, N,N dialkyldimethyl ammonium chloride, tallow alkyl bis(polyethoxy)ethyl ammonium, ethyl sulfate and methyl-bis(2-hydroxyethyl) coco ammonium chloride.

**4.** The ink jet ink of Claim 2 wherein the cationic polymeric dispersant is selected from the group consisting of AB block polymers, BAB block polymers, ABC block polymers, branched polymers and random polymers.

**5.** The ink jet ink of Claim 2 wherein the cationic polymeric dispersant is a block copolymer, and wherein the ink composition comprises approximately 0.1 to 8% pigment, 0.1 to 8% block copolymer, 79 to 99.75% aqueous vehicle and 0.1% to about 10% by weight of the surfactant, based on the total weight of the ink.

**6.** The ink jet ink of Claim 1 wherein the surfactant is present in the amount of about 0.1% to about 10% by weight based on the total weight of the ink.

**7.** The ink jet ink of Claim 1 wherein the surfactant is present in the amount of about 0.5% to about 3% by weight based on the total weight of the ink.

**8.** The ink jet ink of Claim 1 wherein the aqueous vehicle is a mixture of water and a water soluble organic solvent.

European Patent Office

# EUROPEAN SEARCH REPORT

Application Number
EP 98 12 2258

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE 43 28 215 A (DU PONT) 3 March 1994<br>* page 3, line 14 - page 5, line 39 *<br>* page 5, line 49 - line 50 *<br>--- | 1,2,4-8 | C09D11/00 |
| A | US 5 538 549 A (KATO MASAHITO ET AL)<br>23 July 1996<br>* column 2, line 27 - column 3, line 31 *<br>* column 3, line 56 - column 4, line 8 *<br>* column 3, line 32 - line 45 *<br>* column 4, line 3 - line 7 *<br>--- | 1,2,5-8 | |
| A | EP 0 799 870 A (TOYO INK MFG CO)<br>8 October 1997<br>* page 3, line 30 - line 35 *<br>* page 3, line 18 - line 29 *<br>* page 3, line 59 - page 4, line 1 *<br>* page 4, line 15 *<br>----- | 1 | |

TECHNICAL FIELDS SEARCHED (Int.Cl.6)
C09D

The present search report has been drawn up for all claims

| Place of search | Date of completion of the search | Examiner |
|---|---|---|
| THE HAGUE | 24 March 1999 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 12 2258

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-1999

| Patent document cited in search report | Publication date | Patent family member(s) | Publication date |
|---|---|---|---|
| DE 4328215 A | 03-03-1994 | US 5310778 A | 10-05-1994 |
| | | JP 2512861 B | 03-07-1996 |
| | | JP 6157954 A | 07-06-1994 |
| US 5538549 A | 23-07-1996 | JP 7331147 A | 19-12-1995 |
| EP 0799870 A | 08-10-1997 | JP 9268266 A | 14-10-1997 |
| | | US 5772746 A | 30-06-1998 |

EPO FORM P0459

For more details about this annex : see Official Journal of the European Patent Office, No. 12/82